(19) Europäisches Patentamt / European Patent Office / Office européen des brevets

(11) **EP 4 700 077 A1**

(12) **EUROPEAN PATENT APPLICATION**
published in accordance with Art. 153(4) EPC

(43) Date of publication:
**25.02.2026 Bulletin 2026/09**

(21) Application number: 24792018.4

(22) Date of filing: **17.04.2024**

(51) International Patent Classification (IPC):
**C08J 11/08** (2006.01)   **C08J 3/02** (2006.01)

(52) Cooperative Patent Classification (CPC):
**C08J 3/02; C08J 5/18; C08J 7/00; C08J 11/08; C08L 1/02**

(86) International application number:
**PCT/CN2024/088184**

(87) International publication number:
**WO 2024/217433 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023 CN 202310412795**

(71) Applicant: **Zhengzhou Zhongyuan Spandex Engineering Technology Co., Ltd**
**Zhengzhou, Henan 450001 (CN)**

(72) Inventors:
• **SANG, Tian**
**Zhengzhou, Henan 450001 (CN)**
• **CUI, Yuewei**
**Zhengzhou, Henan 450001 (CN)**

(74) Representative: **Keltie LLP**
**No. 1 London Bridge**
**London SE1 9BA (GB)**

(54) **METHOD FOR PREPARING FLEXIBLE MATERIAL BY USING FABRIC**

(57)    The present invention provides a method for preparing flexible materials using fabrics through a hot pressing polymer-permeation process. The method involves first activating and dissolving the cellulose contained in the fabric using an aqueous solution of alkaline ionic liquids, yielding a "glue-like" cellulose macromolecule ionic liquid solution. The remaining undissolved fibers are then bonded together via hot pressing. Finally, the hot-pressed material undergoes a softening treatment using polymer-permeation, ultimately producing a high-strength flexible material based on waste textiles. This invention does not require pure ionic liquids or complete cellulose dissolution. It features short processing times and simplified procedures while partially retaining the inherent strength of natural fibers. It significantly enhances the fracture stress and elongation of the flexible material, achieving a maximum fracture stress exceeding 60 MPa and a maximum elongation at break exceeding 50%.

EP 4 700 077 A1

## Description

The present invention claims priority for the Chinese invention patent application with application number 202310412795.6, titled "A Method for Preparing Flexible Materials Using Fabric," filed with the China National Intellectual Property Administration on April 18, 2023.

## Technical Field

The present invention relates to the field of reusing waste textiles, and specifically to a method for preparing flexible biodegradable materials using fabric.

## Background technique

With rising consumption levels, the pace of clothing replacement has accelerated, generating vast quantities of discarded textiles, among which cotton fabrics constitute a significant proportion. Current methods for regenerating waste textiles or cellulose materials primarily involve completely dissolving the cellulose before regenerating and reusing it. Although cellulose is the main component of waste textiles, complete dissolution, regeneration and reuse are challenging. Firstly, this is because cellulose is a polyhydroxy substance, causing the cellulose fibers to have a high crystallinity, making complete dissolution difficult. Traditional viscose processes involve alkali treatment followed by carbon disulfide esterification to produce cellulose xanthate, which must then be dissolved in a dilute alkali solution to obtain regenerated cellulose. The entire preparation process is affected by such issues as high energy consumption, significant pollution, and complex processes. The novel NMMO (N-Methylmorpholine N-oxide) dissolution method presents high technical challenges, and NMMO is highly explosive. Industrial-scale production requires a recovery rate exceeding 95%. The ionic liquid method necessitates dissolving cellulose in a completely anhydrous pure ionic liquid, pure ionic liquids are highly viscous, and result in even higher production costs. Secondly, due to the presence of a large range of colors in fabrics, decolorizing of mixed fabric waste is exceptionally difficult, and it must be subjected to multiple bleaching processes, further exacerbating environmental pollution. Finally, blended fibers are invariably present in fabrics, and their removal is extremely difficult, further complicating the dissolution process. Consequently, difficulties are always encountered in industrialization where adoption of a full cellulose dissolution strategy to achieve textile reuse is concerned. Existing cellulose full-dissolution technologies are primarily applied to naturally occurring materials with high cellulose content, such as cellulose pulp and cotton materials, processing yielding products mainly in the form of regenerated fibers and cellulose films. Additionally, the high temperatures and extended processing times required for complete dissolution often lead to reduced polymerization of cellulose, resulting in recycled materials of low strength and durability.

Furthermore, the rapid expansion of online shopping has led to increased consumption of packaging materials and logistics waste. Generally, the film materials used in courier packaging include polyethylene, polypropylene, cellulose, nylon, and aluminum foil. The majority of these plastics (e.g., polyethylene, polystyrene, and polyvinyl chloride) feature stable long polymer chains, and take hundreds or even thousands of years to break down. In view of this, if it were possible to convert some waste textiles containing cellulose into flexible film materials, the high cellulose content present in such fabrics would make it possible to not only resolve the issues of recycling waste textiles, but would also resolve the biodegradability issues encountered with packaging materials.

## Content of the Invention

This invention aims to utilize the cellulose present in fabrics containing cellulose fibers. It employs an aqueous solution of alkaline ionic liquid to first activate the cellulose, followed by hot pressing bonding and polymer permeation modification to prepare a flexible material. This addresses issues in existing technologies for processing waste fabrics, such as the complete dissolution of cellulose, complex recycling processes, and the poor flexibility of the resulting cellulose materials.

To resolve these issues, the present invention discloses a method for preparing flexible materials using fabric, wherein activation pretreatment is carried out first on the fabric using an aqueous ionic liquid solution, then it is subjected to hot pressing bonding, and finally it is processed using a polymer permeation technique to obtain the flexible material.

The fabrics referred to in the present invention include woven fabrics, knitted fabrics, nonwoven fabrics, braided fabrics and the like.

In one embodiment of the present invention, said aqueous ionic liquid solution is an aqueous solution of alkaline ionic liquid obtained by adding deionized water to an ionic liquid and adjustment of the pH of the solution using an alkaline substance such as imidazole.

In one embodiment of the invention, the fabrics comprise waste fabrics, waste fabrics refers to used or discarded cellulose-containing textiles from households, businesses, or individuals, including clothing, bed sheets or quilts and the like. The ionic liquid comprises 1-allyl-3-methylimidazolium chloride,1-butyl-3-methylimidazolium chloride, 1-ethyl-3-methylimidazolium chloride, 1-butyl-3-methylimidazolium acetate, or 1-ethyl-3-methylimidazolium diethyl phosphate.

In one embodiment of the present invention, the fabric is a pure-spun or blended textile containing 30-100% cellulose fiber, the pure-spun fabric comprises any one of cotton fabric, linen fabric, viscose fabric, paper yarn fabric, or cupro fabric, the blended textile comprises fabric containing at least two materials, out of cotton, linen, viscose, paper yarn, or cupro.

In one embodiment of the present invention, the mass fraction of the ionic liquid in the aqueous ionic liquid solution system is 70-95%, the mass fraction of the alkaline substance in the aqueous ionic liquid solution is 1-5%, and the remainder is deionized water. The alkaline substance comprises at least one of imidazole, sodium hydroxide, and choline.

The objective of the present invention is to prepare a flexible material using partially dissolved cellulose as the connecting element, and undissolved fibers as the framework. This invention employs an aqueous ionic liquid solution to immerse the fabric, controlling the dissolution degree through water evaporation. Insufficient water leads to excessive fiber dissolution in the fabric, resulting in an insufficient framework portion in the product, affecting its mechanical properties and flexibility. Excessive water causes insufficient fiber dissolution in the fabric, leading to inadequate connecting elements in the product and hindering the production of uniform film-like materials. The addition of alkaline substances is to promote fiber swelling within the fabric, facilitating more thorough mixing of the ionic liquid with cellulose and enhancing product uniformity. The term "uniform" refers to the film material being a continuous sheet without macro-level pore defects that impair product performance, and does not imply identical properties throughout the entire film.

In one embodiment of the present invention, the activation pretreatment comprises an immersion step and a dissolution step. The immersion step involves immersing the fabric in an aqueous solution of ionic liquid. The dissolution step involves subjecting the fabric to a heating activation treatment after it undergoes rolling.

The heating activation treatment is conducted at a temperature of 45-200°C, and preferably at 90-200°C, and more preferably at 45-125°C, for a duration of 5-120 minutes.

Optionally, a rolling step may be included between the immersion and dissolution steps. The rolling step is for removal of excess aqueous ionic liquid solution after immersion of the fabric.

In one embodiment of the present invention, the hot pressing temperature is 80-200°C, and preferably 120-200°C, the pressure is 0.05-15 MPa, and preferably 0.05-1.5 MPa, the hot pressing time is 0.5-300 seconds, and preferably 0.5-60 seconds.

The hot pressing process heats the ionic liquid within the activated pretreated fabric to the dissolution temperature, causing the fibers to dissolve to a predetermined dissolution extent. This forms a flexible material using partially dissolved cellulose as the connecting element, and undissolved fibers as the framework. Therefore, a hot pressing temperature range should be set that enables fiber dissolution. The hot pressing time should be neither excessively long nor excessively short. An excessively long time results in excessive connecting elements and insufficient fiber framework in the resultant film, impairing its mechanical properties and flexibility. An excessively short time hinders the formation of a uniform film-like material.

In one embodiment of the present invention, the polymer permeation process involves subjecting the hot-pressed bonded fabric to permeation treatment in a liquid containing a polymer, the polymer comprises at least one selected from polyethylene glycol, polyvinyl alcohol, citrate-based polymers, and sorbitan-based polymers, the polymer concentration in said liquid containing the polymer is 1-50%, and the permeation time is 0.1-24 hours.

As permeation treatment takes place in the liquid containing the polymer, the above-mentioned polymers can penetrate to the interior of the cellulose, weakening the intermolecular forces between cellulose chains and increasing their mobility, enhancing the plasticity and flexibility of the film material. Compared with simply immersing the fabric in water or an aqueous solution of a solvent, this significantly increases the flexibility of the resulting film material.

The present invention further discloses a flexible material prepared using the aforementioned method.

In one embodiment of the present invention, the flexible material comprises cellulose-based film materials.

One objective of the present invention is the provision of the aforementioned flexible material for applications in such fields as textiles, medicine, food packaging, adhesive tapes, cables, insulating substrates, and flexible electronic devices.

**Beneficial Effects:**

(1) This invention employs an aqueous solution of alkaline ionic liquid to activate and dissolve cellulose, followed by a hot pressing bonding polymer permeation method to prepare a flexible material. Partial activation and dissolution of the fiber surface generates a glue-like macromolecular cellulose ionic liquid solution. A hot pressing technique is used to bond the remaining undissolved fibers together, yielding a flexible material characterized by "partially dissolved cellulose as the connecting elements and undissolved fibers as the framework". To achieve partial rather than complete dissolution, this invention employs an alkaline aqueous ionic liquid system, degree of dissolution being controlled by moisture evaporation. To enhance the durability of the material, the present invention adopts a polymer permeation strategy: alcohol or ester polymers (possessing hydrogen bonding capabilities) permeate between cellulose molecular chains, boosting material flexibility, ultimately yielding a biodegradable cellulose-based flexible material.

(2) This invention avoids complete cellulose dissolution, thereby preserving the inherent strength of the natural fibers and significantly increasing the fracture stress of the cellulose-based flexible material. Maximum fracture stress can exceed 60 MPa.

(3) The cellulose-based flexible material prepared using this method exhibits high fracture elongation. Following polymer permeation treatment, the toughness of the flexible material is substantially enhanced, with maximum fracture elongation exceeding 50%.

(4) Applying the present invention to waste textiles recycling substantially reduces processing time while achieving high energy efficiency. Traditional cellulose film production requires complete dissolution followed by casting, which involves high dissolution temperatures and lengthy processing times (often several hours). This invention eliminates the need for complete cellulose dissolution. Instead, a cellulose ionic liquid solution is obtained through mild surface dissolution within minutes, enabling immediate hot pressing, saving processing time and reducing energy consumption.

## Specific Embodiments

To clarify the objectives, technical solutions and advantages of the embodiments of the present invention, the following, taken with the embodiments of the present invention provides a clearer and more complete description of the technical schemes of the present invention. Clearly, the described embodiments are only some of the embodiments of the present invention, and not all the embodiments. All other embodiments achievable by a person skilled in the art without innovation that are based on the embodiments of the present invention shall all fall within the scope of protection of the present invention.

Embodiments 1-8 and Comparative Examples 1-2 of the present invention employ a hydroentangled nonwoven fabric made from cotton fibers, hereinafter referred to as nonwoven fabric; Embodiment 9 employs waste viscose fabric with a grammage of 200 $g/m^2$; Embodiment 10 employs paper yarn fabric, which is a blended fabric comprising 76% paper yarn and 24% polyester, with a grammage of 20 $g/m^2$, as the raw material.

The ionic liquid used in Embodiments 1-8 and Comparative Examples 1-2 of the present invention is 1-butyl-3-methylimidazolium chloride; the ionic liquid used in Embodiment 9 is 1-ethyl-3-methylimidazolium chloride.

For liquid retention rate testing, fabric weights were measured before and after immersion and recorded as WO and W1, respectively. Liquid retention rate was calculated using the following formula:

$$P = [(W1 - W0) / W0] \times 100\%$$

The liquid retention rate can be controlled by adjusting the rolling time and pressure.

Tensile performance test: conducted in accordance with GB/T 13022-1991 "Plastics-determination of tensile properties of films";

Biodegradation test method: testing was conducted using the natural biodegradation method as per JISK6950-94. A specific weight of flexible film material is oven-dried and weighed to obtain weight M0, then buried in soil in the natural environment at a depth exceeding 10 cm, and retrieved periodically and weighed, to obtain the residual weight M1. The degradation rate was calculated using the following formula:

$$Br(\%) = [(M0 - M1) / M0] \times 100\%$$

## Embodiment 1

A method for preparing flexible material from waste textiles, comprising the following steps:

(1) Preparation of alkaline ionic liquid aqueous solution: take 70g of 1-butyl-3-methylimidazolium ionic liquid, add 1g of imidazole and 29g of water, and stir to form a homogeneous mixed solvent;

(2) Activation pretreatment: immerse the cotton nonwoven fabric in the alkaline aqueous ionic liquid solution at room temperature. After rolling to ensure 100% liquid retention, place the fabric in a 90°C oven for 180 minutes to obtain the activated pretreated nonwoven fabric sample;

(3) Hot pressing bonding: place the pretreated nonwoven sample from step (2) onto a hot pressing table. Control the pressing temperature at 120°C and apply pressure at 1.5 MPa for 60 seconds to obtain the hot-pressed film material.

(4) Permeation treatment: immerse the heat-pressed film material from step (3) in a 1% polyethylene glycol (Mn-20000) solution at room temperature for 24 hours. Remove the treated film material and air-dry it to obtain a translucent, flexible film material.

Testing revealed the resulting translucent flexible film material exhibited a tensile fracture stress of 25.6 MPa, an elongation at break of 32.93%, and a 90-day biodegradation rate of 93.43%.

**Embodiment 2**

Embodiment 2 differs from Embodiment 1 in the polymer used during the permeation treatment. In Embodiment 1, the permeation polymer selected was polyethylene glycol (PEG) with a molecular weight of 20,000. In Embodiment 2, polyvinyl alcohol (PVA1788) and sorbitan ester were used as the permeation treatment polymer.

Table 1 Effect of Different Polymer Permeation on Film Mechanical Properties

| Polymer | Fracture Stress/MPa | Elongation at Break/% |
|---|---|---|
| Polyethylene Glycol (Mn-20000) | 25.6 | 32.93 |
| Polyvinyl Alcohol (PVA1788) | 16.2 | 24.21 |
| Sorbitan Ester | 9.1 | 14.57 |

As can be seen from Table 1 the use of aqueous solutions of the above-mentioned polymers as the solidification bath for permeation treatment resulted in regenerated film materials with an elongation at break significantly in excess of 10% in all cases, while in terms of mechanical performance, all exhibited pronounced flexibility.

**Embodiment 3**

Embodiment 3 differs from Embodiment 1 in the polymer used during the permeation treatment. While Embodiment 1 employed polyethylene glycol with a molecular weight of 20,000, Embodiment 3 utilized polyethylene glycol with a molecular weight of 600 and 4,000 respectively as the permeation polymer.

Table 2 Effect of PEG Molecular Weight on Film Mechanical Properties

| Polymer | Fracture Stress /MPa | Elongation at Break/% |
|---|---|---|
| PEG 600 | 4.1 | 13.66 |
| PEG 4000 | 7.03 | 14.07 |
| PEG 20000 | 25.6 | 32.93 |

As can be seen from Table 2 the use of polyethylene glycol solutions of different molecular weights as the solidification bath for permeation treatment resulted in regenerated film materials with an elongation at break significantly in excess of 10% in all cases, while in terms of mechanical performance, all exhibited pronounced flexibility. Among these, PEG 20000 demonstrated superior mechanical properties overall.

**Embodiment 4**

Embodiment 4 differs from Embodiment 1 in the process parameters used during hot pressing bonding. Embodiment 1 employed hot pressing at 120°C and 1.5 MPa for 60 seconds. The hot pressing parameters used in Embodiment 4 and the corresponding properties of the prepared films are shown in Table 3.

Table 3 Effect of Hot Pressing Parameters on Film Properties

| Hot pressing Temperature /°C | Pressure/MPa | Hot pressing Time/Seconds | Fracture stress /MPa | Elongation at Break/% |
|---|---|---|---|---|
| 120 | 0.05 | 60 | 5.6 | 52.10 |
| 120 | 1.5 | 60 | 25.6 | 32.93 |
| 150 | 0.05 | 60 | 24.8 | 28.32 |
| 150 | 1.5 | 0.5 | 34.4 | 25.36 |
| 200 | 0.05 | 60 | 25.1 | 24.57 |
| 200 | 1.5 | 0.5 | 36.5 | 26.43 |

As can be seen from Table 3, the recycled film materials obtained with the above hot pressing process parameters all exhibited good fracture stress and elongation at break, while in terms of mechanical performance, all exhibited pronounced flexibility.

**Embodiment 5**

Embodiment 5 differs from Embodiment 1 in the activation pretreatment temperature. In Embodiment 1, the oven temperature during activation pretreatment was 90°C. The activation pretreatment temperatures used in Embodiment 5 and the corresponding film properties are shown in Table 4.

Table 4 Effect of Activation Pretreatment Temperature on Film Properties

| Temperature/°C | Fracture stress/MPa | Elongation at Break/% |
|---|---|---|
| 90 | 25.6 | 32.93 |
| 120 | 60.2 | 30.34 |
| 150 | 63.1 | 30.11 |
| 200 | 12.5 | 52.40 |

As can be seen from Table 4, the regenerated film materials obtained at the aforementioned activation pretreatment temperatures all exhibited favorable fracture stress and elongation at break, while in terms of mechanical performance, all exhibited pronounced flexibility.

**Embodiment 6**

Embodiment 6 differs from Embodiment 1 in the concentration of the ionic liquid used. The concentration of the ionic liquid aqueous solution in Embodiment 1 was 70%. The concentrations of the ionic liquid used in Embodiment 6 and the various properties of the prepared films are shown in Table 5.

Table 5 Effect of Ionic Liquid Concentration on Film Properties

| Concentration/% | Fracture stress /MPa | Elongation at Break/% |
|---|---|---|
| 70 | 25.63 | 32.93 |
| 90 | 41.5 | 35.55 |
| 100 | 10.2 | 3.20 |

As can be seen from Table 5, compared to pure ionic liquids, the regenerated film materials obtained through activation pretreatment with aqueous solutions of ionic liquids exhibit superior mechanical properties and flexibility.

**Embodiment 7**

Embodiment 7 differs from Embodiment 1 in the alkali content of the ionic liquid solution used. The alkali content in Embodiment 1 was 1%. The alkali content of the ionic liquid solutions used in Embodiment 7 and the various properties of the prepared films are shown in Table 6.

Table 6 Effect of Alkali Content on Film Properties

| Alkali Content/% | Fracture stress/MPa | Elongation at Break/% |
|---|---|---|
| 1 | 25.6 | 32.93 |
| 3 | 31.5 | 30.55 |
| 5 | 21.2 | 13.10 |

As can be seen from Table 6, the regenerated film materials obtained through activation pretreatment with aqueous ionic liquid solutions with the above alkali contents all exhibit elongation at break significantly exceeding 10%, while in terms of mechanical performance, all exhibited pronounced flexibility.

**Embodiment 8**

Embodiment 8 differs from Embodiment 1 in the type of alkali used in the ionic liquid solution. The alkali added in Embodiment 1 was imidazole, while Embodiment 8 employed different alkalis. The various properties of the prepared films are shown in Table 7.

Table 7 Effect of Alkali Type on Film Properties

| Alkali Type | Fracture stress/MPa | Elongation at Break/% |
|---|---|---|
| Imidazole | 25.6 | 32.93 |
| Sodium Hydroxide | 35.5 | 28.55 |
| Choline | 23.2 | 15.70 |

As can be seen from Table 7, the recycled film materials obtained through ionic liquid aqueous solution activation pretreatment using the aforementioned alkali types all exhibit elongation at break significantly exceeding 10%, while in terms of mechanical performance, all exhibited pronounced flexibility.

**Comparative Example 1**

The difference between Comparative Example 1 and Embodiment 1 is that the nonwoven fabric was not subjected to polymer permeation treatment after hot pressing. The properties of the prepared film are shown in Table 8.

Table 8 Effect of Polymer Permeation Treatment on Film Properties

| Polymer permeation treated or not | Fracture stress/MPa | Elongation at Break/% |
|---|---|---|
| Untreated | 36.2 | 8.70 |
| Permeation treated | 25.6 | 32.93 |

As can be seen from Table 8, the elongation at break of the recycled film material significantly increases after polymer permeation treatment, markedly enhancing the material's flexibility.

**Comparative Example 2**

Comparative Example 2 differs from Embodiment 1 in the polymer treatment sequence. In Comparative Example 2, PEG of the same concentration is directly added to the fabric before hot pressing, and no polymer permeation treatment is performed after hot pressing.
In contrast, Embodiment 1 involves permeation treatment of the fabric after hot pressing. The properties of the prepared films are shown in Table 9.

Table 9 Effects of Polymer Addition Sequence on Film Properties

| Polymer Treatment Sequence | Fracture stress/MPa | Elongation at Break/% |
|---|---|---|
| Added before hot pressing | 10.5 | 5.70 |
| Post-hot pressing permeation treatment | 25.6 | 32.93 |

As can be seen from Table 9, performing permeation treatment on the fabric after hot pressing significantly enhances the mechanical properties and flexibility of the prepared film compared to adding the polymer before hot pressing.

Embodiment 9

Embodiment 9 differs from Embodiment 1 in the raw material used. Embodiment 1 employed cotton fiber nonwoven fabric, while Embodiment 9 utilized viscose fabric. Testing revealed the resulting translucent flexible film material exhibited a tensile fracture stress of 33.4 MPa, and an elongation at break of 34.27%.

Embodiment 10

Embodiment 10 differs from Embodiment 1 in the raw material used. Embodiment 1 employs cotton nonwoven fabric, while Embodiment 10 utilizes paper yarn fabric. Testing revealed the resulting translucent flexible film material exhibited a tensile fracture stress of 28 MPa, and an elongation at break of 18%.

## Claims

1. A method for preparing flexible materials from fabrics, wherein activation pretreatment is carried out first on the fabric using an aqueous ionic liquid solution, then it is subjected to hot-press bonding, and finally it is processed using a polymer permeation technique to obtain the flexible material.

2. The method according to Claim 1, wherein said aqueous ionic liquid solution is an aqueous solution of alkaline ionic liquid obtained by adding deionized water to an ionic liquid and adjustment of the pH of the solution using an alkaline substance.

3. The method according to Claims 1 or 2, wherein the ionic liquid comprises 1-allyl-3-methylimidazolium chloride,1-butyl-3-methylimidazolium chloride, 1-ethyl-3-methylimidazolium chloride, 1-butyl-3-methylimidazolium acetate, or 1-ethyl-3-methylimidazolium diethyl phosphate.

4. The method according to Claims 1 or 2, wherein the fabric is a pure-spun or blended fabric containing 30-100% cellulose fiber, wherein the pure-spun fabric comprises any one of cotton fabric, linen fabric, viscose fabric, paper yarn fabric, or cupro fabric, and the blended textile comprises fabric containing at least two of cotton, linen, viscose, paper, or cupro fabric.

5. The method according to Claims 1 or 2, wherein the mass fraction of the ionic liquid in the aqueous ionic liquid solution system is 70-95%, the mass fraction of the alkaline substance is 1-5%, and the remainder is deionized water, wherein the alkaline substance comprises at least one of imidazole, sodium hydroxide, or choline.

6. The method according to Claims 1 or 2, wherein the activation pretreatment comprises an immersion step and a dissolution step, wherein the immersion step involves immersing the fabric in the aqueous ionic liquid solution, and the dissolution step involves subjecting the fabric to a heating activation treatment at a temperature of 90-200°C for 5-120 minutes after it undergoes rolling.

7. The method according to Claims 1 or 2, wherein the hot pressing and bonding temperature is 100-200°C, the pressure is 0.05-1.5 MPa, and the hot pressing time is 0.5-60 seconds.

8. The method according to Claims 1 or 2, wherein the polymer permeation process involves permeation treatment of the hot-pressed bonded fabric in a liquid containing a polymer, wherein the polymer comprises at least one selected from polyethylene glycol, polyvinyl alcohol, citrate-based polymers, and sorbitan-based polymers, the polymer concentration in said liquid is 1-50%, and the permeation time is 0.1-24 hours.

9. A flexible material prepared by any method according to Claims 1 to 8.

10. The flexible material according to Claim 9, for use in the fields of textiles, medicine, food packaging, adhesive tapes, cables, insulating substrates, and flexible electronic devices.

## INTERNATIONAL SEARCH REPORT

| International application No. |
|---|
| **PCT/CN2024/088184** |

**A. CLASSIFICATION OF SUBJECT MATTER**

C08J11/08(2006.01)i; C08J3/02(2006.01)i

According to International Patent Classification (IPC) or to both national classification and IPC

**B. FIELDS SEARCHED**

Minimum documentation searched (classification system followed by classification symbols)

IPC: C08J

Documentation searched other than minimum documentation to the extent that such documents are included in the fields searched

Electronic data base consulted during the international search (name of data base and, where practicable, search terms used)

CNTXT, ENTXT, VCN, CNABS, VEN, CNKI, ISI: 离子液体, 织物, 热压, 纤维素, ionic, ionic, liquid, fabric, textile, hot, press, cellulose

**C. DOCUMENTS CONSIDERED TO BE RELEVANT**

| Category* | Citation of document, with indication, where appropriate, of the relevant passages | Relevant to claim No. |
|---|---|---|
| A | CN 106146877 A (INSTITUTE OF CHEMISTRY, CHINESE ACADEMY OF SCIENCES) 23 November 2016 (2016-11-23) entire document | 1-10 |
| A | EP 3339508 A1 (NITROCHEMIE ASCHAU GMBH) 27 June 2018 (2018-06-27) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 August 2024** | **28 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088184**

| Patent document cited in search report | | | Publication date (day/month/year) | Patent family member(s) | | | Publication date (day/month/year) |
|---|---|---|---|---|---|---|---|
| CN | 106146877 | A | 23 November 2016 | None | | | |
| EP | 3339508 | A1 | 27 June 2018 | EP | 3339508 | B1 | 24 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310412795